# EUROPEAN PATENT APPLICATION

(11) **EP 3 865 601 A1**
(43) Date of publication of application: **18.08.2021**
(21) Application number: 19884660.2
(22) Date of filing: 31.10.2019
(51) Int. Cl.: C22C 38/58, C22C 38/42, C22C 38/00, C22C 38/44, C22C 38/02, C22C 38/04, C21D 8/02

(54) **NONMAGNETIC AUSTENITIC STAINLESS STEEL AND MANUFACTURING METHOD THEREFOR**

(30) Priority: 12.11.2018 KR 20180138491
(71) Applicant: POSCO, Donghaean-ro, Nam-gu, Pohang-si Gyeongsangbuk-do 37859 (KR)
(72) Inventor: KIM, Kyung-Hun, Pohang-si Gyeongsangbuk-do 37671 (KR); PARK, Ji Eon, Pohang-si Gyeongsangbuk-do 37671 (KR); KIM, Hak, Pohang-si Gyeongsangbuk-do 37656 (KR); KANG, Hyung-Gu, Pohang-si Gyeongsangbuk-do 37836 (KR); KIM, Ji Soo, Pohang-si Gyeongsangbuk-do 37659 (KR)
(74) Representative: Potter Clarkson
(86) International application number: PCT/KR2019/014538
(87) International publication number: WO 2020/101227

(57) **Abstract**

Disclosed are a non-magnetic austenitic stainless steel having excellent hot workability and low permeability during manufacturing, and a manufacturing method thereof.

The non-magnetic austenitic stainless steel according to an embodiment of present disclosure includes, in percent (%) by weight of the entire composition, C: 0.01 to 0.05%, Si: 1.5% or less, Mn: 0.5 to 3.5%, Cr: 17.0 to 22.0%, Ni: 9.0 to 14.0%, Mo: 1.0% or less, Cu: 0.2 to 2.5%, N: 0.05 to 0.25%, the remainder of iron (Fe) and other inevitable impurities, and satisfies following Formulas (1) and (2).

(1) 0 ≤ 3*(Cr+Mo) + 5*Si - 65*(C+N) - 2*(Ni+Mn) - 27 ≤ 5

(2) 660 - 500*(C+N) - 10*Cr - 30*(Ni+Si+Mo+Cu) ≤ 0

## Description

### [Technical Field]

The present disclosure relates to a non-magnetic austenitic stainless steel, and more particularly, to a non-magnetic austenitic stainless steel having excellent hot workability and low permeability during manufacturing, and a manufacturing method thereof.

### [Background Art]

Recently, with the advent of smart devices having various functions, new demands for factors that can affect the functions of devices are intensifying even in materials used in electronic devices. In particular, there is an increasing demand for magnetic reduction to improve electrical efficiency and prevent malfunction. Since 300 series stainless steel generally exhibits non-magnetic properties due to the non-magnetic properties of the austenite phase, it is widely used as a material for such electronic devices.

On the other hand, when solidifying 300 series stainless steel, delta-ferrite is formed. Delta-ferrite, which is formed during solidification, has the effect of inhibiting grain growth and improving hot workability. In general, delta-ferrite can be stably decomposed in a temperature range of 1,300 to 1,450°C through heat treatment. However, there are cases where delta-ferrite remains without being completely removed even in the rolling and annealing process. Due to the residual delta-ferrite, magnetism is increased, and thus, there is a problem that it cannot be used as a material for electronic devices.

### [Disclosure]

### [Technical Problem]

The present disclosure provides a non-magnetic austenitic stainless steel that controls the delta-ferrite content formed during solidification to prevent the formation of magnetism and deterioration of hot workability of austenitic stainless steel, and suppresses the increase in magnetism due to martensite transformation even in the work hardening process, and manufacturing method thereof.

### [Technical Solution]

In accordance with an aspect of the present disclosure, a non-magnetic austenitic stainless hot-rolled annealed steel sheet includes, in percent (%) by weight of the entire composition, C: 0.01 to 0.05%, Si: 1.5% or less, Mn: 0.5 to 3.5%, Cr: 17.0 to 22.0%, Ni: 9.0 to 14.0%, Mo: 1.0% or less, Cu: 0.2 to 2.5%, N: 0.05 to 0.25%, the remainder of iron (Fe) and other inevitable impurities, and satisfies a following Formula (1).

(1) 0 ≤ 3*(Cr+Mo) + 5*Si - 65*(C+N) - 2*(Ni+Mn) - 27 ≤ 5

Here, Cr, Mo, Si, C, N, Ni, and Mn mean the content (% by weight) of each element.

The non-magnetic austenitic stainless hot-rolled annealed steel sheet may have a permeability of 1.05 or less and a hardness of 170 Hv or more.

The number of surface crack may be 0.3 or less per unit meter (m).

In accordance with another aspect of the present disclosure, a non-magnetic austenitic stainless cold-rolled steel sheet includes, in percent (%) by weight of the entire composition, C: 0.01 to 0.05%, Si: 1.5% or less, Mn: 0.5 to 3.5%, Cr: 17.0 to 22.0%, Ni: 9.0 to 14.0%, Mo: 1.0% or less, Cu: 0.2 to 2.5%, N: 0.05 to 0.25%, the remainder of iron (Fe) and other inevitable impurities, and satisfies following Formulas (1) and (2).

(1) 0 ≤ 3*(Cr+Mo) + 5*Si - 65*(C+N) - 2*(Ni+Mn) - 27 ≤ 5

(2) 660 - 500*(C+N) - 10*Cr - 30*(Ni+Si+Mo+Cu) ≤ 0

Here, Cr, Mo, Si, C, N, Ni, Mn and Cu mean the content (% by weight) of each element.

The cold-rolled steel sheet may be a cold-rolled material with a reduction ratio of 60% or more, and has a permeability of 1.05 or less and a hardness of 350 Hv or more.

In accordance with another aspect of the present disclosure, a manufacturing method of a non-magnetic austenitic stainless steel includes :manufacturing a hot-rolled annealed steel sheet by performing hot rolling and annealing heat treatment on a slab comprising, in percent (%) by weight of the entire composition, C: 0.01 to 0.05%, Si: 1.5% or less, Mn: 0.5 to 3.5%, Cr: 17.0 to 22.0%, Ni: 9.0 to 14.0%, Mo: 1.0% or less, Cu: 0.2 to 2.5%, N: 0.05 to 0.25%, the remainder of iron (Fe) and other inevitable impurities; and manufacturing a cold-rolled steel sheet by cold rolling the hot-rolled annealed steel sheet at a reduction ratio of 60% or more, and the slab satisfies following Formulas (1) and (2), a permeability of the hot-rolled annealed steel sheet and the cold-rolled steel sheet is 1.05 or less.

(1) 0 ≤ 3*(Cr+Mo) + 5*Si - 65*(C+N) - 2*(Ni+Mn) - 27 ≤ 5

(2) 660 - 500*(C+N) - 10*Cr - 30*(Ni+Si+Mo+Cu) ≤ 0

Here, Cr, Mo, Si, C, N, Ni, Mn and Cu mean the content (% by weight) of each element.

The hardness of the hot-rolled annealed steel sheet may be 170 Hv or more, and the hardness may be increased by 150 Hv or more by the cold rolling.

### [Advantageous Effects]

The non-magnetic austenitic stainless steel according to the embodiment of the present disclosure can secure non-magnetic properties by suppressing the formation of delta-ferrite without deteriorating hot workability. In addition, it is possible to prevent the formation of magnetism during work hardening to improve strength by suppressing strain-induced martensite generation.

Suppression of magnetism can lead to the effect of preventing communication errors in smart devices and increasing power efficiency, and improving the strength through work hardening can contribute to weight reduction of parts, thereby reducing the weight of smart devices.

### [Description of Drawings]

FIG. 1 is a graph showing the distribution of the number of cracks on the surface of a hot-rolled annealed steel sheet according to Formula (1) of an embodiment of the present disclosure.
FIG. 2 is a graph showing the distribution of permeability of a cold-rolled steel sheet according to Formula (2) of an embodiment of the present disclosure.

### [Best Mode]

A non-magnetic austenitic stainless hot-rolled annealed steel sheet according to an embodiment of present disclosure includes, in percent (%) by weight of the entire composition, C: 0.01 to 0.05%, Si: 1.5% or less, Mn: 0.5 to 3.5%, Cr: 17.0 to 22.0%, Ni: 9.0 to 14.0%, Mo: 1.0% or less, Cu: 0.2 to 2.5%, N: 0.05 to 0.25%, the remainder of iron (Fe) and other inevitable impurities, and satisfies a following Formula (1).

(1) 0 ≤ 3*(Cr+Mo) + 5*Si - 65*(C+N) - 2*(Ni+Mn) - 27 ≤ 5

Here, Cr, Mo, Si, C, N, Ni, and Mn mean the content (% by weight) of each element.

### [Modes of the Invention]

Hereinafter, the embodiments of the present disclosure will be described in detail with reference to the accompanying drawings. The following embodiments are provided to transfer the technical concepts of the present disclosure to one of ordinary skill in the art. However, the present disclosure is not limited to these embodiments, and may be embodied in another form. In the drawings, parts that are irrelevant to the descriptions may be not shown in order to clarify the present disclosure, and also, for easy understanding, the sizes of components are more or less exaggeratedly shown.

A non-magnetic austenitic stainless steel according to an embodiment of present disclosure includes, in percent (%) by weight of the entire composition, C: 0.01 to 0.05%, Si: 1.5% or less, Mn: 0.5 to 3.5%, Cr: 17.0 to 22.0%, Ni: 9.0 to 14.0%, Mo: 1.0% or less, Cu: 0.2 to 2.5%, N: 0.05 to 0.25%, the remainder of iron (Fe) and other inevitable impurities.

Hereinafter, the reason for limiting the numerical value of the alloy element content in the embodiment of the present disclosure is described. Hereinafter, unless otherwise specified, the unit is % by weight.

The content of C is 0.01 to 0.05%.

C is a strong austenite phase stabilizing element and is an element that is effective in suppressing the increase in magnetism not only during solidification but also during work hardening. In order to stabilize the austenite phase, it is necessary to add 0.01% or more. However, there is a problem in that the corrosion resistance is reduced by lowering the Cr content around the grain boundaries, since it combines with Cr, which is effective in corrosion resistance, at the grain boundary to form carbides when the content is excessive. Therefore, in order to secure sufficient corrosion resistance, it is necessary to limit the content of C to 0.05% or less.

The content of Si is 1.5% or less.

Si shows an effect on improving corrosion resistance, but there is a problem of generating magnetism as a ferrite phase stabilizing element. In addition, when excessive, it promotes precipitation of intermetallic compounds such as σ phase, thereby lowering mechanical properties and corrosion resistance, so it is preferable to limit it to 1.5% or less.

The content of Mn is 0.5 to 3.5%.

Mn is an austenite phase stabilizing element such as C and Ni, and is effective for nonmagnetic strengthening. However, since the increase of the Mn content is involved in the formation of inclusions such as MnS, the corrosion resistance decreases, and there is a problem of lowering the surface gloss, it is preferable to limit the Mn content to 0.5 to 3.5%.

The content of Cr is 17.0 to 22.0%.

Cr is the most important element for improving the corrosion resistance of stainless steel. In order to secure sufficient corrosion resistance, it is preferable to include 17.0% or more, but since Cr is a ferrite phase stabilizing element, it is necessary to limit the addition in non-magnetic steel. When the Cr content is increased, the ferrite phase fraction increases, so that a large amount of Ni must be included in order to obtain non-magnetic properties, so the cost increases, and the formation of the σ phase is promoted, which causes a decrease in mechanical properties and corrosion resistance. Therefore, it is preferable to limit the Cr content to 22.0% or less.

The content of Ni is 9.0 to 14.0%.

Ni is the most powerful element of the austenite phase stabilizing element and must be contained by 9.0% or more to obtain non-magnetic properties. However, since the increase in Ni content is directly related to the increase in the price of raw materials, it is preferable to limit Ni content to 14% or less.

The content of Mo is 1.0% or less.

Mo is a useful element for improving corrosion resistance, but as a ferrite phase stabilizing element, when a large amount is added, the ferrite phase fraction increases, making it difficult to obtain non-magnetic properties. In addition, it is preferable to limit it to 1.0% or less because the formation of a σ phase is promoted, which causes a decrease in mechanical properties and corrosion resistance.

The content of Cu is 0.2 to 2.5%.

Cu is an element useful for stabilizing the austenite phase and can be used by replacing it with expensive Ni. It is necessary to add 0.2% or more to secure nonmagnetic and reduce cost. However, when a large amount is added, it forms a low-melting-point phase, reducing hot workability and lowering the surface quality. Therefore, it is desirable to limit it to 2.5% or less.

The content of N is 0.05 to 0.25%.

N is an element useful for stabilizing the austenite phase and is an essential element for securing nonmagnetic properties. Therefore, it is necessary to add 0.05% or more. However, when a large amount is added, the hot workability is reduced and the surface quality of the steel is deteriorated, so it is desirable to limit it to 0.25% or less.

Excluding the above alloying elements, the rest of the stainless steel is made of Fe and other inevitable impurities.

In general, 300 series stainless steels are mostly composed of austenite phase and some ferrite phases formed during solidification appear as a remaining microstructure. In 300 series stainless steel, the ferrite phase is effective in improving hot workability by preventing grain boundary segregation during solidification and inhibiting grain growth during reheating. Therefore, in the case of general 304 and 316 steel grades, a ferrite phase is formed during solidification, and the product also contains some ferrite phase.

On the other hand, the austenite phase present in the structure of 300 series stainless steel has a face-centered cubic structure and does not exhibit magnetism. However, the ferrite phase becomes magnetic due to the characteristics of the tissue having a body-centered cubic structure. Therefore, the application may be limited for electronic products due to magnetic properties depending on the content of the remaining ferrite phase. For this reason, in the case of non-magnetic steel, it is essential to reduce or eliminate the fraction of the ferrite phase as low as possible.

The residual ferrite phase content is greatly influenced by the alloy composition and annealing heat treatment. The content of ferrite formed during solidification in 300 series stainless steel is affected by the content of component elements such as Ni, Mn, C, and N that stabilize the austenite phase and the content of component elements such as Cr and Mo that stabilize the ferrite phase. Since the ferrite phase generated during solidification is unstable at high temperatures, it can be reduced through hot rolling and subsequent annealing heat treatment. As a result of evaluating the residual ferrite fraction considering the degree of decomposition by subsequent processes after continuous casting and hot rolling for various components, an formula for the residual ferrite content as shown in Formula (1) was derived.

(1) 0 ≤ 3*(Cr+Mo) + 5*Si - 65*(C+N) - 2*(Ni+Mn) - 27 ≤ 5

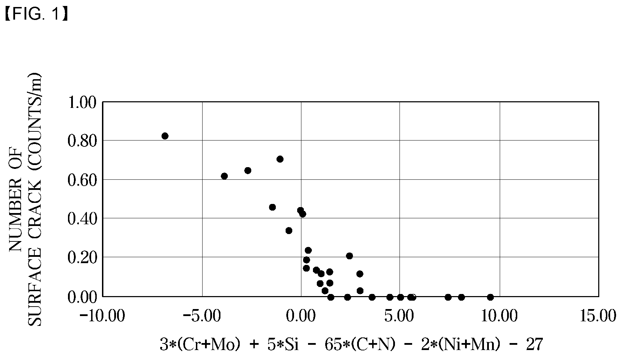

If Formula (1) has a negative value less than 0, cracks occur on the surface due to deterioration of hot workability. FIG. 1 is a graph showing the distribution of the number of cracks on the surface of a hot-rolled annealed steel sheet according to Formula (1) of an embodiment of the present disclosure. Referring to FIG. 1, it can be seen that when the value of Equation (1) is less than 0, the number of cracks is 0.3/m or more, which occurs frequently.

On the other hand, the residual ferrite fraction of hot-rolled annealed steel sheet is limited to 1% or less in order to secure non-magnetic properties of permeability of 1.05 or less. When the value of Formula (1) exceeds 5, the residual ferrite fraction becomes 1% or more. Through this, in the present disclosure, when the value of Formula (1) is in the range of 0 to 5, it is possible to manufacture austenitic stainless steel that satisfies non-magnetic properties without deteriorating hot workability.

On the other hand, in the austenitic stainless steel, the magnetism occurs due to the formation of a martensite phase during work hardening. Work hardening occurs not only in the process applied to increase the strength of the material, but also during molding to make a product shape. If the magnetism increases, it is necessary to suppress the increase in magnetism because the use is limited for home appliances.

In order to prevent the increase in magnetism due to work hardening, the austenitic stainless steel of the present disclosure can satisfy Formula (2).

(2) 660 - 500*(C+N) - 10*Cr - 30*(Ni+Si+Mo+Cu) ≤ 0

If the value of Formula (2) shows a positive value greater than 0, martensite transformation occurs during cold working. If the non-magnetic austenitic stainless cold-rolled steel sheet according to the present disclosure satisfies Formula (2), the non-magnetic austenitic stainless cold-rolled steel sheet can suppress the formation of the strain-induced martensite phase even when cold rolling of 60% or more, thus a final cold rolled material with a permeability of 1.05 or less can be provided.

Next, a manufacturing method of a non-magnetic austenitic stainless steel according to an embodiment of the present disclosure is described.

The manufacturing method of the non-magnetic austenitic stainless steel according to the present disclosure can be manufactured through a general process of austenitic stainless steel. It is important to control the composition of alloy elements in order to prevent the formation of the residual ferrite fraction and strain-induced martensite phase during cold rolling after hot rolling annealing heat treatment.

The manufacturing method of a non-magnetic austenitic stainless steel may include: manufacturing a hot-rolled annealed steel sheet by performing hot rolling and annealing heat treatment on a slab comprising, in percent (%) by weight of the entire composition, C: 0.01 to 0.05%, Si: 1.5% or less, Mn: 0.5 to 3.5%, Cr: 17.0 to 22.0%, Ni: 9.0 to 14.0%, Mo: 1.0% or less, Cu: 0.2 to 2.5%, N: 0.05 to 0.25%, the remainder of iron (Fe) and other inevitable impurities; and manufacturing a cold-rolled steel sheet by cold rolling the hot-rolled annealed steel sheet at a reduction ratio of 60% or more.

By satisfying Formula (1), the hot-rolled annealed steel sheet can exhibit the permeability of 1.05 or less, and by satisfying Formula (2), the permeability of the cold-rolled steel sheet can also exhibit 1.05 or less.

According to an embodiment of the present disclosure, the hardness of the hot-rolled annealed steel sheet may be 170 Hv or more, and it is possible to suppress the formation of the strain-induced martensite phase during cold rolling, so that an increase in hardness of 150 Hv or more can be secured under 60% cold rolling conditions.

The increase in hardness of hot-rolled annealed steel sheet and cold-rolled steel sheets is due to the addition of interstitial elements such as C and N. Typical 300 series stainless steel exhibits an increase in strength through martensitic transformation. However, in the present disclosure, in order to suppress the increase of magnetism, this transformation phenomenon is limited and the effect of the solid solution strengthening by the addition of interstitial elements is maximized. Through this, the hardness of the hot-rolled annealed material can be increased, and strength can be secured through dislocation pinning during cold working.

Hereinafter, it will be described in more detail through a preferred embodiment of the present disclosure.

### Example

### 1. Hot workability and non-magnetic evaluation

After casting the steel having the alloy composition shown in Table 1 into a slab having a thickness of 200 mm through a continuous casting process, a hot annealed steel sheet was manufactured through hot rolling and annealing heat treatment processes. Hot rolling was performed to a thickness of 6mm after heating at 1,250 °C for 2 hours, and after the hot-rolled steel sheet was annealed at 1,150°C, the property evaluation was performed..

**<Table 1 >**

| Steel grade No. | C | Si | Mn | Cr | Ni | Mo | Cu | N |
|---|---|---|---|---|---|---|---|---|
| 1 | 0.029 | 0.37 | 0.97 | 21.2 | 9.5 | 0.51 | 0.76 | 0.209 |
| 2 | 0.041 | 0.97 | 0.83 | 20.6 | 10.9 | 0.54 | 0.21 | 0.164 |
| 3 | 0.022 | 0.39 | 0.80 | 21.3 | 10.1 | 0.60 | 0.81 | 0.200 |
| 4 | 0.030 | 1.00 | 1.95 | 21.6 | 13.7 | 0.00 | 0.99 | 0.125 |
| 5 | 0.030 | 0.40 | 0.80 | 21.3 | 10.3 | 0.60 | 0.80 | 0.220 |
| 6 | 0.027 | 0.39 | 0.92 | 21.4 | 9.4 | 0.54 | 0.82 | 0.207 |
| 7 | 0.029 | 0.33 | 0.95 | 21.2 | 9.5 | 0.55 | 0.75 | 0.218 |
| 8 | 0.032 | 1.01 | 2.88 | 20.7 | 10.0 | 0.00 | 2.00 | 0.172 |
| 9 | 0.031 | 0.97 | 3.07 | 20.7 | 10.9 | 0.00 | 2.03 | 0.133 |
| 10 | 0.029 | 1.48 | 2.06 | 17.0 | 10.0 | 0.76 | 2.00 | 0.104 |
| 11 | 0.026 | 0.40 | 0.78 | 21.2 | 9.3 | 0.58 | 0.84 | 0.240 |
| 12 | 0.027 | 0.39 | 0.86 | 21.4 | 10.2 | 0.58 | 0.72 | 0.238 |
| 13 | 0.032 | 1.01 | 1.96 | 19.9 | 9.0 | 0.00 | 2.01 | 0.209 |
| 14 | 0.030 | 1.00 | 1.00 | 20.7 | 11.1 | 0.00 | 2.00 | 0.178 |
| 15 | 0.030 | 1.49 | 2.05 | 17.1 | 10.0 | 0.50 | 1.99 | 0.096 |
| 16 | 0.031 | 0.96 | 2.03 | 18.8 | 10.0 | 0.00 | 2.01 | 0.114 |
| 17 | 0.025 | 0.99 | 2.00 | 18.0 | 8.0 | 0.00 | 1.98 | 0.156 |
| 18 | 0.020 | 1.48 | 2.02 | 17.0 | 9.1 | 0.50 | 1.99 | 0.140 |
| 19 | 0.022 | 0.97 | 1.00 | 21.2 | 10.0 | 0.52 | 0.21 | 0.157 |
| 20 | 0.015 | 0.61 | 0.66 | 17.7 | 12.1 | 2.07 | 0.27 | 0.013 |
| 21 | 0.024 | 0.67 | 0.67 | 17.7 | 12.1 | 2.04 | 0.28 | 0.020 |
| 22 | 0.019 | 0.47 | 1.06 | 16.1 | 10.1 | 2.04 | 0.29 | 0.014 |
| 23 | 0.030 | 0.40 | 0.80 | 21.3 | 9.3 | 0.60 | 0.80 | 0.200 |
| 24 | 0.031 | 0.99 | 2.00 | 20.3 | 10.9 | 0.00 | 0.99 | 0.180 |
| 25 | 0.025 | 0.42 | 0.86 | 21.2 | 9.4 | 0.54 | 0.79 | 0.280 |
| 26 | 0.025 | 0.97 | 0.96 | 20.4 | 12.4 | 0.20 | 0.30 | 0.179 |
| 27 | 0.024 | 0.47 | 1.31 | 17.3 | 14.6 | 2.54 | 0.20 | 0.049 |
| 28 | 0.050 | 0.93 | 1.02 | 20.3 | 12.1 | 0.00 | 0.00 | 0.200 |
| 29 | 0.023 | 0.45 | 1.27 | 17.3 | 14.4 | 2.55 | 0.00 | 0.048 |
| 30 | 0.097 | 0.98 | 0.98 | 20.5 | 12.2 | 0.00 | 0.00 | 0.210 |
| 31 | 0.033 | 1.01 | 1.98 | 17.9 | 7.8 | 0.00 | 2.00 | 0.197 |

Table 2 is the result of evaluating the number of cracks on the surface of the 6mm hot-rolled coil, the permeability, and the permeability of the cold-rolled steel sheet after 60% cold rolling to a thickness of 2.4mm. The number of cracks on the surface is the number of cracks per unit meter obtained by dividing the total number of surface cracks by the coil length in a 6mm thick coil. When the number of cracks on the surface is usually 0.3 or less, it is judged as excellent in surface quality. The permeability was measured using a contact type ferometer, and a value of 1.05 or less is required for use in general electronic products.

**<Table 2>**

| | Steel grade No. | Formula (1) | number of crack (counts/m) | hot-rolled annealed steel sheet permeability (µ) | Formula (2) | cold-rolled steel sheet permeability (µ) |
|---|---|---|---|---|---|---|
| Inventive Example | 1 | 3.50 | 0.00 | 1.040 | -4.4 | 1.046 |
| | 2 | 4.43 | 0.00 | 1.024 | -26.3 | 1.036 |
| | 3 | 4.42 | 0.00 | 1.010 | -21.0 | 1.020 |
| | 4 | 1.43 | 0.00 | 1.004 | -104.2 | 1.003 |
| | 5 | 2.25 | 0.00 | 1.020 | -41.0 | 1.022 |
| | 6 | 4.92 | 0.00 | 1.008 | -5.5 | 1.024 |
| | 7 | 2.89 | 0.03 | 1.046 | -8.4 | 1.045 |
| | 8 | 1.13 | 0.03 | 1.030 | -39.3 | 1.031 |
| | 9 | 1.35 | 0.07 | 1.039 | -46.0 | 1.039 |
| | 10 | 0.91 | 0.07 | 1.005 | -3.7 | 1.038 |
| | 11 | 2.89 | 0.12 | 1.027 | -18.6 | 1.042 |
| | 12 | 1.39 | 0.13 | 1.037 | -44.1 | 1.036 |
| | 13 | 0.16 | 0.15 | 1.005 | -20.1 | 1.008 |
| | 14 | 2.38 | 0.21 | 1.007 | -74.0 | 1.007 |
| Comparative Example | 15 | 0.96 | 0.12 | 1.007 | 6.6 | 1.067 |
| | 16 | 0.72 | 0.14 | 1.002 | 10.4 | 1.051 |
| | 17 | 0.19 | 0.19 | 1.014 | 60.4 | 1.096 |
| | 18 | 0.26 | 0.24 | 1.012 | 17.9 | 1.084 |
| | 19 | 9.47 | 0.00 | 1.673 | 7.5 | 1.702 |
| | 20 | 8.00 | 0.00 | 1.131 | 18.5 | 1.247 |
| | 21 | 7.33 | 0.00 | 1.058 | 9.6 | 1.150 |
| | 22 | 5.43 | 0.00 | 1.080 | 96.0 | 2.000 |
| | 23 | 5.55 | 0.00 | 1.062 | -1.0 | 1.076 |
| | 24 | -0.66 | 0.34 | 1.003 | -34.9 | 1.003 |
| | 25 | -0.03 | 0.43 | 1.002 | -39.0 | 1.017 |
| | 26 | -0.12 | 0.45 | 1.002 | -60.9 | 1.002 |
| | 27 | -1.54 | 0.46 | 1.002 | -84.3 | 1.003 |
| | 28 | -3.94 | 0.62 | 1.003 | -58.9 | 1.004 |
| | 29 | -1.16 | 0.71 | 1.002 | -70.5 | 1.003 |
| | 30 | -6.91 | 0.83 | 1.002 | -93.9 | 1.003 |
| | 31 | -2.76 | 0.65 | 1.004 | 41.7 | 1.081 |

Referring to Tables 1 and 2 together, hot-rolled annealed steel sheets of 1 to 18 steel grades showed that the number of surface cracks is 0.24 pieces/m or less when the value of Formula (1) has a positive value of 0 or more, and showed good surface quality. On the other hand, for steel grades 24 to 31, the number of cracks increased as the value of Formula (1) was negative.

The permeability was also measured to be 1.05 or less when the value of Formula (1) was 5 or less, and when the value of Formula (1) was greater than 5, the permeability was greater than 1.05 due to excessive residual ferrite fraction.

Through this, it was confirmed that the range of Formula (1) should be in the range of 0 to 5 in order to obtain a level of permeability suitable for use in electronic products without the problem of hot workability, and the distribution of the number of cracks according to Formula (1) is shown in FIG. 1.

Among the 1 to 18 steel grades that satisfy Formula (1), only 1 to 14 steel grades satisfy Formula (2) at the same time. For steels 1 to 14, Formula (2) was also satisfied, so that the formation of the strain-induced martensite phase was suppressed even during cold rolling with a 60% reduction ratio, so that the permeability of the final cold-rolled steel sheet did not increase, and it satisfies 1.05 or less. However, since the 15 to 18 steel grades satisfied Formula (1), the permeability of the hot-rolled annealed steel sheet was 1.05 or less, but the value of Formula (2) was positive and the permeability increased after cold rolling. From this, it was found that a strain-induced martensite phase was formed during cold rolling.

For steel grades 19 to 23, the value of Formula (1) exceeds 5, and the permeability is 1.05 or more. Among them, the 19 to 22 steel grades had a positive value in Formula (2), so that the increase in permeability was large. From this, the formation of the strain-induced martensite phase could be inferred. For 23 steel, the alloy composition satisfies the scope of the present disclosure, but the hot-rolled annealed steel sheet had a high permeability due to the dissatisfaction of Formula (1), and the increase in the permeability was not significant due to the satisfaction of Formula (2).

For steel grades 24 to 31, the value of Formula (1) is negative, showing a case in which hot workability is poor. For steel grades 24 to 30, despite the high number of surface cracks due to the poor hot workability, as a result of performing the cold rolling process, the increase in the permeability was very small because Formula (2) was satisfied. However, although the number of cracks on the surface of the 31 steel was high, the permeability of the hot-rolled annealed steel sheet was very low at 1.004, but the permeability of the steel sheet was significantly increased to 1.081 due to the high value of Formula (2).

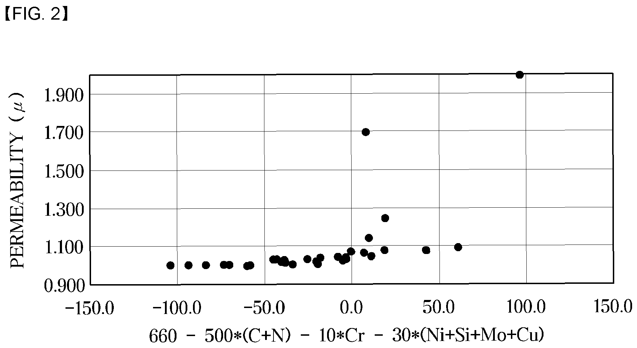

As such, when the value of Formula (2) satisfies 0 or less, it was confirmed that non-magnetic properties can be maintained by suppressing the generation of strain-induced martensite phase in the cold rolling process of 60% or more. FIG. 2 shows a graph of the permeability distribution according to Formula (2) based on this example.

### 2. Hardness evaluation

Table 3 is a result of evaluating the hardness of each of the cold-rolled steel sheets after 60% cold rolling with 6mm hot-rolled coils of the 1 to 14 steel grades and 2.4mm.

**<Table 3>**

| Steel grade No. | hot-rolled annealed steel sheet hardness (Hv) | cold-rolled steel sheet hardness (Hv) | Increase in hardness (Hv) |
|---|---|---|---|
| 1 | 187 | 392 | 205 |
| 2 | 175 | 389 | 214 |
| 3 | 198 | 387 | 189 |
| 4 | 195 | 356 | 161 |
| 5 | 201 | 395 | 194 |
| 6 | 194 | 372 | 178 |
| 7 | 192 | 433 | 241 |
| 8 | 207 | 371 | 164 |
| 9 | 198 | 353 | 155 |
| 10 | 207 | 365 | 158 |
| 11 | 206 | 380 | 174 |
| 12 | 199 | 382 | 183 |
| 13 | 208 | 385 | 177 |
| 14 | 200 | 366 | 166 |

Hot-rolled annealed steel sheet hardness of 1 to 14 steel grades satisfying the alloy composition of the present disclosure was 170 Hv or more, and after 60% cold rolling, the hardness increased by at least 150 Hv. The final cold-rolled material exhibited excellent hardness of 350 Hv or more without generating a strain-induced martensite phase, and it was confirmed that sufficient hardness can be secured when used for electronic products.

In the above description, exemplary embodiments of the present disclosure have been described, but the present disclosure is not limited thereto. Those of ordinary skill in the art will appreciate that various changes and modifications can be made without departing from the concept and scope of the following claims.

### [Industrial Applicability]

The austenitic stainless steel according to the present disclosure can realize nonmagnetic and high hardness characteristics, so it can be variously applied to the fields requiring non-magnetic properties such as smart devices that are gradually becoming diverse.

## Claims

1. A non-magnetic austenitic stainless hot-rolled annealed steel sheet comprising, in percent (%) by weight of the entire composition, C: 0.01 to 0.05%, Si: 1.5% or less, Mn: 0.5 to 3.5%, Cr: 17.0 to 22.0%, Ni: 9.0 to 14.0%, Mo: 1.0% or less, Cu: 0.2 to 2.5%, N: 0.05 to 0.25%, the remainder of iron (Fe) and other inevitable impurities, and
satisfying a following Formula (1).
(1) 0 ≤ 3*(Cr+Mo) + 5*Si - 65*(C+N) - 2*(Ni+Mn) - 27 ≤ 5
(Here, Cr, Mo, Si, C, N, Ni, and Mn mean the content (% by weight) of each element)

2. The non-magnetic austenitic stainless hot-rolled annealed steel sheet of claim 1, wherein the non-magnetic austenitic stainless hot-rolled annealed steel sheet has a permeability of 1.05 or less and a hardness of 170 Hv or more.

3. The non-magnetic austenitic stainless hot-rolled annealed steel sheet of claim 1, wherein a number of surface crack is 0.3 or less per unit meter (m).

4. A non-magnetic austenitic stainless cold-rolled steel sheet comprising, in percent (%) by weight of the entire composition, C: 0.01 to 0.05%, Si: 1.5% or less, Mn: 0.5 to 3.5%, Cr: 17.0 to 22.0%, Ni: 9.0 to 14.0%, Mo: 1.0% or less, Cu: 0.2 to 2.5%, N: 0.05 to 0.25%, the remainder of iron (Fe) and other inevitable impurities, and
satisfying following Formulas (1) and (2).
(1) 0 ≤ 3*(Cr+Mo) + 5*Si - 65*(C+N) - 2*(Ni+Mn) - 27 ≤ 5
(2) 660 - 500*(C+N) - 10*Cr - 30*(Ni+Si+Mo+Cu) ≤ 0
(Here, Cr, Mo, Si, C, N, Ni, Mn and Cu mean the content (% by weight) of each element)

5. The non-magnetic austenitic stainless cold-rolled steel sheet of claim 4, wherein the cold-rolled steel sheet is a cold-rolled material with a reduction ratio of 60% or more, and has a permeability of 1.05 or less and a hardness of 350 Hv or more.

6. A manufacturing method of a non-magnetic austenitic stainless steel, the manufacturing method comprising,
manufacturing a hot-rolled annealed steel sheet by performing hot rolling and annealing heat treatment on a slab comprising, in percent (%) by weight of the entire composition, C: 0.01 to 0.05%, Si: 1.5% or less, Mn: 0.5 to 3.5%, Cr: 17.0 to 22.0%, Ni: 9.0 to 14.0%, Mo: 1.0% or less, Cu: 0.2 to 2.5%, N: 0.05 to 0.25%, the remainder of iron (Fe) and other inevitable impurities; and
manufacturing a cold-rolled steel sheet by cold rolling the hot-rolled annealed steel sheet at a reduction ratio of 60% or more, and
wherein the slab satisfies following Formulas (1) and (2),
a permeability of the hot-rolled annealed steel sheet and the cold-rolled steel sheet is 1.05 or less.
(1) 0 ≤ 3*(Cr+Mo) + 5*Si - 65*(C+N) - 2*(Ni+Mn) - 27 ≤ 5
(2) 660 - 500*(C+N) - 10*Cr - 30*(Ni+Si+Mo+Cu) ≤ 0
(Here, Cr, Mo, Si, C, N, Ni, Mn and Cu mean the content (% by weight) of each element)

7. The manufacturing method of claim 6, wherein a hardness of the hot-rolled annealed steel sheet is 170 Hv or more, and the hardness is increased by 150 Hv or more by the cold rolling.
